# EUROPÄISCHE PATENTANMELDUNG

(11) **EP 0 641 111 A1**
(43) Veröffentlichungstag der Anmeldung: **01.03.1995**
(21) Anmeldenummer: 93113845.7
(22) Anmeldetag: 30.08.1993
(51) Int. Cl.: H04M 1/72

(54) **Einrichtung zur wechselseitigen Übertragung von analogen und/oder digitalen Signalen**

(71) Anmelder: VOTRONIC ENTWICKLUNGS- UND PRODUKTIONSGESELLSCHAFT FÜR ELEKTRONISCHE GERÄTE mbH, D-66386 St Ingbert (DE)
(72) Erfinder: Voit, Stefan Dipl.-Wirtschaftsingenieur, D-66386 St. Ingbert (DE)
(74) Vertreter: Vièl, Georg, Dipl.-Ing.

(57) **Zusammenfassung**

Eine Einrichtung zur wechselseitigen Übertragung von analogen und/oder digitalen Signalen zwischen einer Basisstation und einer Gegenstation, wobei die Übertragung der Signale zwischen Basisstation und Gegenstation, die als Sende- und Empfangsanlagen ausgebildet sind, drahtlos mit Hilfe von Infrarotwellen erfolgt.

## Beschreibung

Die Erfindung betrifft eine Einrichtung zur wechselseitigen Übertragung von analogen und/oder digitalen Signalen zwischen einer Basisstation und einer Gegenstation.

Einrichtungen der im Oberbegriff genannten Art sind bekannt und werden beispielsweise bei der Überwachung von Haustüren und Gartentoren sowie bei der Ausstattung von Kraftfahrzeugen mit Telefonanlagen verwendet. Die Basisstation ist im allgemeinen fest im Haus bzw. im Kraftfahrzeug, beispielsweise im Kofferraum bei Personenkraftwagen, installiert und über Kabel mit der Gegenstation verbunden, die sich in der Regel an der Haustür oder an dem Gartentor bzw. in Reichweite des Fahrers im Kraftfahrzeug befindet.

Als nachteilig erweist sich bei dieser Ausführung, daß für die Übertragung der Signale von der Basisstation zur Gegenstation und zurück eine aufwendige Verkabelung notwendig ist, deren Kabelstränge bei der Überwachung von Gartentoren durch den Garten, bei Autotelefonanlagen durch den Fahrgastraum zu führen sind. Die Verkabelung stellt außerdem ein großes Hemmnis, vor allem bei der Nachrüstung von Kraftfahrzeugen mit Telefonanlagen, dar, da zur Verlegung der Kabelstränge Verkleidungen im Kraftfahrzeug entfernt und wieder angebracht werden müssen, was oft sehr umständlich ist und den Einbau der Anlage verteuert.

Der Erfindung liegt daher die Aufgabe zugrunde, eine Einrichtung der im Oberbegriff genannten Art herzustellen, bei der die geschilderten Nachteile und Schwierigkeiten von vornherein ausgeschlossen sind, und die unter geringen Kosten herstellbar und montierbar ist.

Diese Aufgabe wird erfindungsgemäß dadurch gelöst, daß die Basisstation und die zugeordnete Gegenstation sowohl als Sende- als auch als Empfangsanlagen für die Signale ausgebildet sind und die Gegenstation ein Mikrofon und einen Lautsprecher aufweist, wobei die wechselseitige Übertragung der Signale zwischen der Basisstation und der Gegenstation drahtlos erfolgt, wobei die Basisstation über eine Festleitung an ein Endgerät angeschlossen ist, das die Energieversorgung der Basisstation übernimmt und die Signale zur Weiterleitung umsetzt und wobei zur wechselseitigen Übertragung der Signale zwischen der Basisstation und der Gegenstation Infrarotwellen vorgesehen sind.

In Kraftfahrzeugen erweist es sich als vorteilhaft, wenn die Gegenstation als mobile Sende- und Empfangsanlage ausgebildet ist und ein Handtelefon aufweist.

Eine Ausbildung der Erfindung sieht vor, daß die Gegenstation an eine stationäre Stromquelle angeschlossen ist.

Es ist aber auch zweckmäßig, daß die Gegenstation eine interne Stromquelle aufweist.

Die mit der Erfindung erzielten Vorteile bestehen insbesondere darin, daß die erfindungsgemäße Einrichtung keine aufwendige Verkabelung erfordert, leicht montierbar und ohne Schwierigkeiten nachrüstbar ist, daß keine störendenen Hochfrequenzsignale erzeugt und abgestrahlt werden, und daß die über die erfindungsgemäße Einrichtung übertragenen Signale abhörsicher sind. Außerdem ermöglicht die erfindungsgemäße Einrichtung das Führen von Telefongesprächen von allen Sitzplätzen eines Personenkraftwagens wie auch eines Busses aus.

Ein Ausführungsbeispiel der Erfindung ist in der Zeichnung dargestellt und wird nachfolgend näher beschrieben.

Es zeigt
- Fig. 1: ein Blockschaltbild der erfindungsgemäßen Einrichtung und
- Fig. 2: eine schematische Darstellung der erfindungsgemäßen Einrichtung in einem Personenkraftwagen.

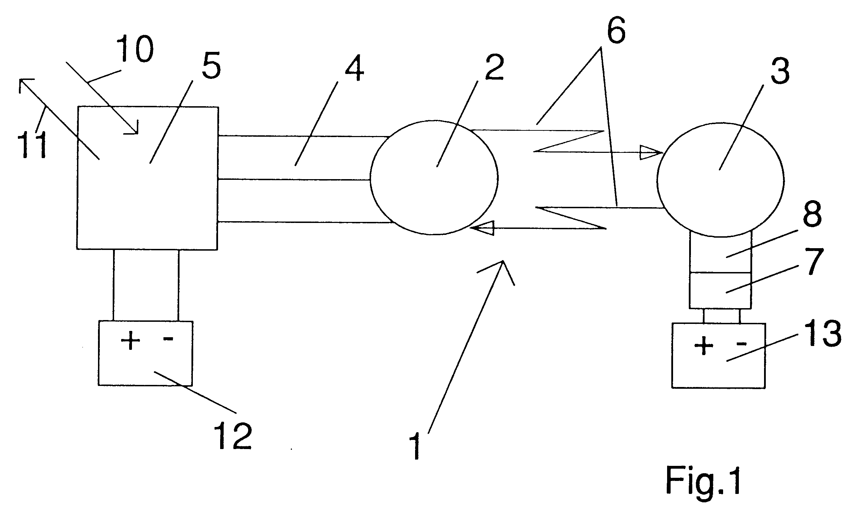

Das in Figur 1 dargestellte Blockschaltbild zeigt die wesentlichen Bausteine der erfindungsgemäßen Einrichtung 1 zur wechselseitigen Übertragung von analogen und/oder digitalen Signalen zwischen einer Basisstation 2 und einer zugeordneten Gegenstation 3. Basisstation 2 und Gegenstation 3 sind sowohl als Sende- als auch als Empfangsanlagen für die zu übertragenden Signale ausgebildet.

Während bei derartigen, bekannten Einrichtungen, deren wesentliche Einsatzgebiete unter anderem Überwachung von Haus- und Garteneingängen sowie Telefonanlagen in Kraftfahrzeugen sind, die Übertragung der Signale zwischen beiden Stationen 2, 3 über Kabel erfolgt, ist nach der Erfindung eine drahtlose Übertragung vorgesehen. Als Träger für die Signale dienen Wellen 6 des Infrarotspektrums (700 - 1400 nm).

Der erfindungsgemäße Einsatz von Infrarotwellen 6 erweist sich als besonders vorteilhaft, da keine störenden Hochfrequenzsignale erzeugt und abgestrahlt werden und darüber hinaus die Signale abhörsicher übermittelt werden können.

Wie aus Fig. 1 hervorgeht ist die Basisstation 2 über eine Festleitung 4 mit einem Endgerät 5 verbunden, das die von außen kommenden Signale 10 aufnimmt und zur Weiterleitung an die Basisstation 2 umsetzt und die auch in umgekehrter Richtung laufenden, von der Basisstation 2 kommenden Signale in nach außen abzugebende Signale 11 umwandelt. Die Aufnahme und Abgabe der ankommenden und abgehenden Signale 10, 11 kann sowohl über Draht als auch, wie in einem nachfolgend beschriebenen bevorzugten Anwendungsbeispiel der erfindungsgemäßen Einrichtung 1, über Funk erfolgen.

Die Gegenstation 3, die bei der Überwachung von Haus- und Garteneingängen in unmittelbarer Nähe des Eingangs angeordnet ist, weist neben der Empfangs- und Sendeanlage noch ein Mikrofon 7 und einen Lautsprecher 8 auf. Zur Energieversorgung von Basisstation 2 und Gegenstation 3 stehen stationäre Stromquellen 12, 13 zur Verfügung.

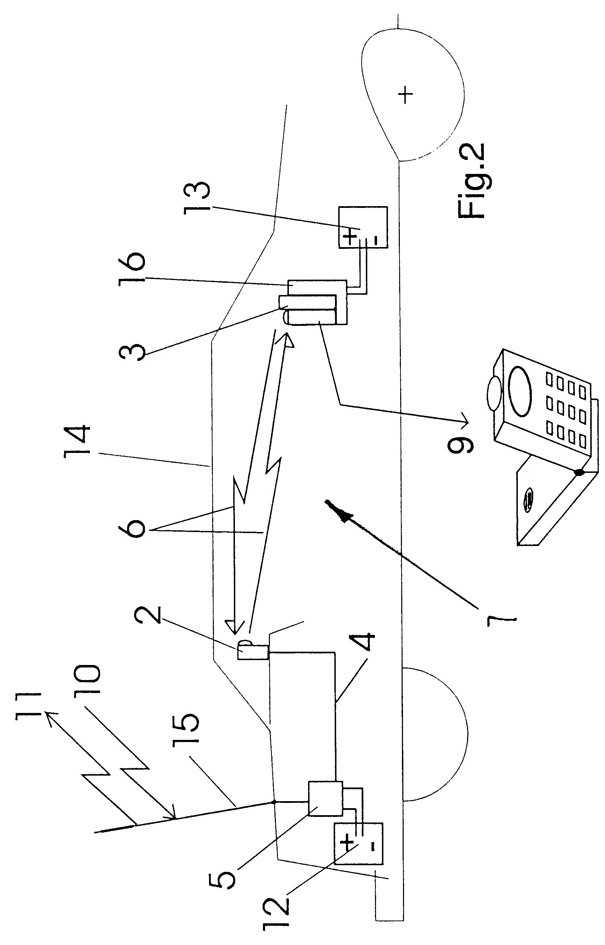

Ein bevorzugtes Anwendungsbeispiel der erfindungsgemäßen Einrichtung ist die Übertragung von analogen und/oder digitalen Signalen in Kraftfahrzeugen im Rahmen eines Funktelefons. Fig. 2 zeigt eine schematische Darstellung einer in einem Personenkraftwagen 14 eingebauten, erfindungsgemäßen Einrichtung 1. Die über eine Funkantenne 15 dem Endgerät 5 im Kofferraum des Personenkraftwagens 14 zugeführten Signale 10 gelangen über die Festleitung 4 zu der Basisstation 2, die in dem gewählten Ausführungsbeispiel auf der Hutablage des Personenkraftwagens 14 in unmittelbarer Nähe des Endgerätes 5 angeordnet ist. Für die Energieversorgung des Endgerätes 5 und der Basisstation 2 steht eine stationäre Stromquelle 12 (Akku) im Kofferraum zur Verfügung.

Von der Basisstation 2 werden die Signale mittels Infrarotwellen 6 der Gegenstation 3 zugestrahlt. Die Gegenstation 3 ist in vorteilhafter Weise als mobile Empfangs- und Sendeanlage ausgebildet und stellt ein mit Empfänger und Sender für Infrarotwellen 6 ausgestattetes Handtelefon 9 dar, das in Fig. 2 neben der erindungsgemäßen Einrichtung 1 im Vergleich dazu in vergrößerter Form gezeichnet ist.

Im Ruhezustand oder in der Freisprechfunktion befindet sich das Handtelefon 9 in einer stationären Halterung 16 am Armaturenbrett des Kraftfahrzeuges 14 und wird von einer stationären Stromquelle 13 mit Energie versorgt.

Für den Mobilbetrieb wird das Handtelefon 9 von der stationären Halterung 16 abgenommen und durch eine interne Stromquelle, die nicht in der Zeichnung dargestellt ist, mit der nötigen Energie versorgt.

Dadurch wird die Möglichkeit geschaffen, innerhalb der Reichweite der Sende- und Empfangsanlagen von Basisstation 2 und Gegenstation 3 mit dem mobilen Handtelefon 9 Signale zu empfangen und zu der Basisstation 2 zurückzusenden. Das bedeutet, daß beispielsweise von allen Sitzplätzen in einem Personenkraftwagen oder in einem Bus eine kabellose Kommunikation möglich ist, was gegenüber der bisher üblichen Praxis eine wesentliche Verbesserung und Erleichterung darstellt.

## Patentansprüche

1. Einrichtung zur wechselseitigen Übertragung von analogen und/oder digitalen Signalen zwischen einer Basisstation (2) und einer Gegenstation (3), wobei die Basisstation (2) und die zugeordnete Gegenstation (3) sowohl als Sende- als auch als Empfangsanlagen für die Signale ausgebildet sind und die Gegenstation (3) ein Mikrofon (7) und einen Lautsprecher (8) aufweist, wobei die wechselseitige Übertragung der Signale zwischen der Basisstation (2) und der Gegenstation (3) drahtlos erfolgt, wobei die Basisstation (2) über eine Festleitung (4) an ein Endgerät 5 angeschlossen ist, das die Energieversorgung der Basisstation (2) übernimmt und die Signale zur Weiterleitung umsetzt und wobei zur wechselseitigen Übertragung der Signale zwischen der Basisstation (2) und der Gegenstation (3) Infrarotwellen (6) vorgesehen sind.

2. Einrichtung nach Anspruch 1, **dadurch gekennzeichnet,** daß die Gegenstation (3) als mobile Sende- und Empfangsanlage ausgebildet ist und ein Handtelefon (9) aufweist.

3. Einrichtung nach Anspruch 1 und 2, **dadurch gekennzeichnet**, daß die Gegenstation (3) an eine stationäre Stromquelle (13) angeschlossen ist.

4. Einrichtung nach einem oder mehreren der vorgenannten Ansprüche, **dadurch gekennzeichnet**, daß die Gegenstation (3) eine interne Stromquelle aufweist.
